## Europäisches Patentamt

## European Patent Office

## Office européen des brevets

(11) Veröffentlichungsnummer: **0 128 871**
**B1**

(12) # EUROPÄISCHE PATENTSCHRIFT

(45) Veröffentlichungstag der Patentschrift: 02.11.88

(21) Anmeldenummer: **84810278.6**

(22) Anmeldetag: **07.06.84**

(51) Int. Cl.⁴: **F 16 C 29/12, B 23 Q 1/26**

(54) Umgriff an einer Linearführung eines Schlittens.

(30) Priorität: **10.06.83 CH 3212/83**

(43) Veröffentlichungstag der Anmeldung: **19.12.84 Patentblatt 84/51**

(45) Bekanntmachung des Hinweises auf die Patenterteilung: **02.11.88 Patentblatt 88/44**

(84) Benannte Vertragsstaaten: **DE FR IT SE**

(56) Entgegenhaltungen:
**CH-A-424 390**
**CH-A-494 902**
**DE-A-1 627 041**
**DE-A-2 346 633**
**DE-A-2 812 034**
**DE-B-1 168 176**
**FR-A-1 460 061**
**GB-A-899 151**
**GB-A-1 228 028**

(73) Patentinhaber: **Hydrel AG, Badstrasse 14, CH- 8590 Romanshorn (CH)**

(72) Erfinder: **Metelski, Andrezej, Spielgasse 2, CH- 8590 Romanshorn (CH)**

(74) Vertreter: **Haffter, Tobias Fred, Dr. Dipl.- Phys., PATENTANWALTS- BUREAU ISLER AG Postfach 6940 Walchestrasse 23, CH- 8023 Zürich (CH)**

EP 0 128 871 B1

## Beschreibung

Aus der DE-A-2 812 034 ist eine Einrichtung gemäss Oberbegriff des Anspruchs 1 bekannt. Diese bekannte Einrichtung hat ein lineares Führungselement. Ein Schlitten ist längs des Führungselementes verschiebbar und hat auf einer Seite des Führungselementes sich abstützende Rollen-Wälzführungen. Längs des Schlittens erstreckt sich eine Trägereinrichtung, die zusammen mit dem Schlitten das Führungselement umgreift. Die Trägereinrichtung umfasst zweite Rollen-Wälzführungen. Sie ist durch vorspannschrauben am Schlitten befestigt und besteht aus einem ersten, mit den zweiten Wälzführungen versehenen Träger sowie einem zweiten, parallel zur Richtung der Vorspannkraft liegenden Träger. Die beiden Träger sind getrennte Bauelemente. Die beiden Träger sind lösbar mit dem Schlitten verbunden.

Bei dieser bekannten Einrichtung ist es sehr schwierig, die gewünschte Vorspannkraft genau einzustellen.

Aus der DE-A-2 346 633 ist eine weitere Längsführungseinrichtung bekannt. Längs einer Schiene ist ein Schlitten verschiebbar geführt. Auf der einen Seite ist der Schlitten durch hydrostatische Luftlager auf der Schiene abgestützt. Die Luftlager sind durch an die gegenüberliegende Seite der Schiene federnd angepresste, drehbar gelagerte Rollen vorbelastet. Die Rollen sind an einem ersten Träger montiert, der an seinem den Rollen abgewandten Rand an einem Stützteil eines mit dem Schlitten einstückigen zweiten Trägers abgestützt ist. Benachbart den Rollen sind in den abgesetzten weiteren Teil des zweiten Trägers Vorspannschrauben eingeschraubt. Zwischen den Kopf der Schrauben und den ersten Träger sind Tellerfederpakete eingesetzt, welche die Vorbelastung der hydrostatischen Lager liefern. Die Lagerspaltbreite der hydrostatischen Lager hängt von der Belastung und vom Speisedruck ab. Je nach Lagerspaltbreite kippt der erste Träger um seine Auflage am Stützteil, so dass die Rollen nur in Ausnahmefällen eine Linienberührung mit der Schiene haben. Die beschriebene Vorrichtung ist deshalb nur für Belastung von der Seite der hydrostatischen Lager geeignet. Durch den variablen Lagerspalt ist die Führung nicht spielfrei.

Aus der CH-A-424 390 und der FR-A-1 460 061 sind spieleinstellbare Gleitlagerführungen bekannt, bei denen ein kippbarer Träger eine Führungsschiene umgreift und mit Schrauben festgespannt werden kann. Wegen der Kippbewegung des Trägers liegt dieser im allgemeinen nicht flächig an der Schiene an und hat deshalb ebenfalls eine beschränkte Tragfähigkeit. Es wäre zwar grundsätzlich möglich, die Vorspannkraft der Schrauben so auszulegen, dass der Träger bei einer bestimmten Nennlast flächig anliegt. Die Vorspannkraft kann jedoch über das Anzugsdrehmoment der Schrauben nur sehr ungenau dosiert werden und ausserdem können die Schrauben bei dieser Lösung leicht losvibrieren, so dass diese periodisch nachgezogen werden müssen.

Der vorliegenden Erfindung liegt die Aufgabe zugrunde, eine Einrichtung gemäss Oberbegriff des Anspruchs 1 derart weiter zu bilden, dass sie spielfrei und in mindestens zwei entgegengesetzten Richtungen hoch belastbar ist. Diese Aufgabe wird durch die kennzeichnenden Merkmale des Anspruchs 1 gelöst.

Ausführungsbeispiele des Erfindungsgegenstandes werden nachstehend anhand der Zeichnung erläutert. Es zeigen:

Fig. 1　　einen Schnitt durch eine Linearführung eines Schlittens mit einer Einrichtung gemäss der Erfindung,

Fig. 2　　einen Schnitt durch den zweiten Träger der Einrichtung der Fig. 1,

Fig. 3　　einen Schnitt durch eine andere Ausführungsform der Linearführung, und

Fig. 4　　einen Schnitt durch eine weitere Ausführungsform der Linearführung.

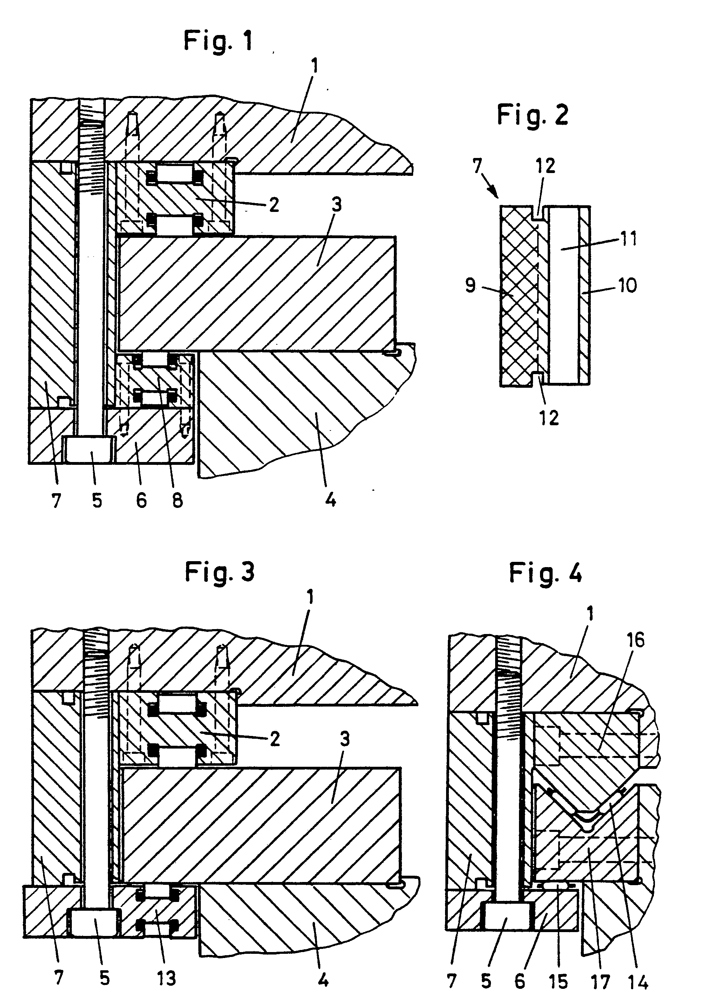

Gemäss Fig. 1 ist ein Schlitten 1 einer Maschine oder einer Vorrichtung über ein erstes, am Schlitten 1 befestigtes Wälzführungsumlaufelement 2 und eine Führungsschiene 3 auf ein Bett 4 der Maschine oder Vorrichtung abgestützt. Zur Ausübung einer Vorspannkraft auf diese Linearführung weist ein mit Schrauben 5 (eine Schraube dargestellt) am Schlitten 1 befestigter Umgriff einen ersten Träger 6 auf, welcher die von den Vorspannschrauben 5 aufgebrachte Vorspannkraft aufnimmt, sowie einen zweiten Träger 7, auf welchen sich der erste Träger 6 aufstützt und der parallel zur Richtung der Vorspannkraft, d. h. parallel zur Richtung der Vorspannschrauben 5, liegt. Zur Übertragung der Vorspannkraft auf die Führungsschiene 3 ist auf dem ersten Träger 6 ein zweites Wälzführungsumlaufelement 8 befestigt.

In Fig. 2 ist ein Träger 7 der Fig. 1 einzeln im Schnitt dargestellt. Der Träger 7 umfasst einen Stützteil 9 und einen Distanzteil 10. Der Stützteil 9 dient der Abstützung des ersten Trägers 6 (Fig. 1) auf den Schlitten 1. Der Distanzteil 10 ist zur Aufnahme der Vorspannschrauben 5 in entsprechenden Bohrungen 11 vorgesehen. Die Längsabmessung des Distanzteils 10 ist kleiner als diejenige des Stützteils 9, was in Fig. 2 durch eine gestrichelte Linie angedeutet ist, so dass der erste Träger im ungespannten Zustand nicht auf dem Distanzteil 10 aufliegt (Fig. 1), sondern mit diesem einen Spalt begrenzt. Der Distanzteil 10 ist zudem durch Nuten 12 gegenüber dem Stützteil 9 abgesetzt.

Um die gewünschte Vorspannkraft einzustellen, werden die Vorspannschrauben 5 so weit angezogen, bis der erste Träger 6 zum Anliegen auf den Distanzteil 10 kommt. Der Stützteil 9 und der Distanzteil 10 des zweiten Trägers 7 können im übrigen einstückig ausgebildet sein oder aber auch aus je einem separat angefertigten Bauteil bestehen, welche beiden Bauteile miteinander fest verbunden sind.

Bei der in Fig. 3 dargestellten Ausführungsform der Linearführung des Schlittens 1, welche ähnlich derjenigen der Fig. 1 ist, sind das Wälzführungsumlaufelement 8 und der erste Träger 6 der Fig. 1 zu einem einzigen Träger- und Führungselement 13 zusammengefasst. Die übrigen Teile des dargestellten Umgriffs, insbesondere die Ausbildung des zweiten Trägers 7, entsprechen denjenigen der Fig. 1 und 2.

Bei der in Fig. 4 dargestellten Ausführungsform der Linearführung des Schlittens 1 weist diese Wälzführungselemente in Form von Flachkäfigen 14 und 15 sowie prismatischen Führungsschienen 16 und 17 auf, welche am Schlitten 1 bzw. am Bett 4 befestigt sind. Der erste Träger 6 mit den Vorspannschrauben 5 und der zweite Träger 7 entsprechen denjenigen der Ausführungsform der Fig. 1 und 2. Der Träger 6 der Fig. 4 ist jedoch direkt als Laufbahn für den einen Flachkäfig 15 ausgebildet.

**Patentansprüche**

1. Einrichtung Zur Lagerung und Führung eines längs eines linearen Führungselements (3) verschiebbaren Schlittens (1) einer Maschine oder Vorrichtung, bei welcher Einrichtung der Schlitten (1) mit einer sich auf die eine Seite dfs Führungselements (3) abstützenden ersten Wälzführung (2,14) mit zylindrischen Wälzkörpern versehen ist, und einer sich auf die gegenüberliegende Seite des Führungselementes (3) abstützende zweite Wälzführung (8, 15) mit zylindrischen Wälzkörpern an einer zusammen mit dem Schlitten (1) das Führungselement (3) umgreifenden, sich längs des Schlittens (1) erstreckenden Trägereinrichtung (6, 7, 13) angeordnet sind, welche mittels Vorspannschrauben (5) am Schlitten (1) befestigt ist und einen ersten, mit der zweiten Wälzführung (8, 15) versehenen und die Vorspannkräfte aufnehmenden Träger (6) sowie einen zweiten, parallel zur Richtung der Vorspannkraft liegenden Träger (7) umfasst, wobei die beiden Träger (6, 7) getrennte, lösbar mit dem Schlitten verbundene und sich längs dem Schlitten (1) erstreckende Elemente sind, dadurch gekennzeichnet, dass der zweite Träger (7) einen sich auf der bezüglich des Führungselementes (3) äusseren Seite befindlichen Stützteil (9) und einen zwischen dem Stützteil (9) und dem Führungselement (3) befindlichen, dem Führungselement benachbarten Distanzteil (10) umfasst, in welchem die zur Höhenrichtung des Stützteils (9) parallelen, den ersten Träger (6) mit dem Schlitten (1) verbindenden Vorspannschrauben (5) aufgenommen sind, wobei der Distanzteil (10) eine in Richtung der Vorspannschrauben (5) gemessene Höhe aufweist, die gegenüber der Höhe des Stützteils (9) derart abgesetzt ist, dass beim Einstellen der gewünschten Vorspannkraft der erste Träger (6) zum Anliegen auf den Distanzteil (10) kommt.

2. Einrichtung nach Anspruch 1, dadurch gekennzeichnet, dass der erste Träger (6) als ein die zweite Wälzführung (8) bildendes Wälzführungsumlaufelement (13) ausgebildet ist (Fig. 3).

3. Einrichtung nach Anspruch 1, dadurch gekennzeichnet, dass der erste Träger (6) eine Lauffläche für Wälzkörper der zweiten Wälzführung aufweist (Fig. 4).

**Claims**

1. Device for mounting and guiding a slide (1) of a machine or apparatus which is displaceable along a linear guideway element (3), in which device the slide (1) is provided with a first anti-friction guideway (2, 14), supported on one side of the guideway element (3) and having cylindrical anti-friction bodies, and a second anti-friction guideway (8, 15), supported on the opposite side of the guideway element (3) and having cylindrical anti-friction bodies, is arranged on a support device (6, 7, 13) which, together with the slide (1), surrounds the guideway element (3), extends along the slide (1), is fixed to the slide (1) by means of pretensioning screws (5) and comprises a first support (6), provided with a second anti-friction guideway (8, 15) and absorbing the pretensioning forces, and also a second support (7) lying parallel to the direction of the pretensioning force, the two supports (6, 7) being separate elements detachably connected to the slide and extending along the slide (1), characterized in that the second support (7) comprises a supporting part (9), located on the outer side with respect to the guideway element (3), and a distance part (10) which is located between the supporting part (9) and the guideway element (3), is adjacent to the guideway element and in which the pretensioning screws (5) parallel to the vertical direction of the supporting part (9) and connecting the first support (6) to the slide (1) are accommodated, the distance part (10) having a height measured in the direction of the pretensioning screws (5) which is off-set relative to the height of the supporting part (9) in such a way that, when the desired pretension in force is set, the first support (6) comes to bear against the distance part (10).

2. Device according to Claim 1, characterized in that the first support (6) is designed as an anti-friction guideway rotational element (13) forming the second anti-friction guideway (8) (Fig. 3).

3. Device according to Claim 1, characterized in that the first support (6) has a running surface for anti-friction bodies of the second anti-friction guideway (Fig. 4).

## Revendications

1. Dispositif pour le logement et le guidage d'un chariot (1) d'une machine ou appareil déplaçable le long d'un élément de glissière linéaire (3), dispositif dans lequel le chariot (1) est pourvu d'une première glissière à rouleaux (2, 14) avec corps roulants cylindriques, s'appuyant d'un côté de l'élément de glissière (3), et une deuxième glissière à rouleaux (8, 15) avec corps roulants cylindriques s'appuyant du côté opposé de l'élément de glissière (3) est disposee sur un organe de soutien (6, 7, 13) s'étendant le long du chariot (1), encerclant l'élément de glissière (3) conjointement avec le chariot (1), fixé sur ledit chariot (1) au moyen de vis de précontrainte (5) et se composant d'un premier support (6) pourvu de la deuxième glissière à rouleaux (8, 15) et absorbant les forces de précontrainte, ainsi que d'un deuxième support (7) se situant parallèlement au sens de la force de précontrainte, les deux supports (6, 7) étant des éléments séparés, relies au chariot (1) tout en étant démontables et s'étendant le long dudit chariot (1), caractérisé en ce que le deuxième support (7) comprend une pièce d'appui (1) se trouvant du côté extérieur par rapport à l'élément de glissière (3) et une pièce d'écartement (10) située entre la pièce d'appui (9) et l'élément de glissière (3), voisine dudit élément de glissière et dans laquelle sont logées les vis de précontrainte (5) parallèles au sens de la hauteur de la pièce d'appui (9) et reliant le premier support (6) au chariot (1), la hauteur, mesurée dans le sens des vis de précontrainte (5), de la pièce d'écartement (10) étant réduite par rapport à celle de la pièce d'appui (9) de telle sorte qu'en réglant la force de précontrainte désirée, le premier support (6) soit contigu à la pièce d'écartement (10).

2. Dispositif selon la revendication 1, caractérisé en ce que le premier support (6) est réalisé comme un élément de circulation (13) de glissière à rouleaux formant la deuxième glissière à rouleaux (8) (figure 3).

3. Dispositif selon la revendication 1, caractérisé en ce que le premier support (6) comprend une surface de roulement pour les corps roulants de la deuxième glissière à rouleaux (figure 4).

Fig. 1

Fig. 2

Fig. 3

Fig. 4